# EUROPÄISCHE PATENTSCHRIFT

(11) **EP 2 156 875 B1**
(45) Veröffentlichungstag und Bekanntmachung des Hinweises auf die Patenterteilung: **08.06.2011**
(21) Anmeldenummer: 09009772.6
(22) Anmeldetag: 29.07.2009
(51) Int. Cl.: B01D 46/02, B01D 46/00, B65D 90/34

(54) **Entstaubungsfilter**
Dust removal filter
Filtre de dépoussiérage

(30) Priorität: 18.08.2008 DE 202008011016 U
(43) Veröffentlichungstag der Anmeldung: 24.02.2010
(73) Patentinhaber: Stanelle, Karl-Heinz, 74363 Güglingen-Frauenzimmern (DE)
(72) Erfinder: Stanelle, Karl-Heinz, 74363 Güglingen-Frauenzimmern (DE)
(74) Vertreter: Müller, Hans

(56) Entgegenhaltungen:
- EP-B- 0 655 939
- DE-A1- 3 931 033
- DE-A1- 4 010 560
- DE-A1- 19 901 128

## Beschreibung

### TECHNISCHES GEBIET

Die Erfindung betrifft einen Entstaubungsfilter, dessen Gehäuse mehrere Filterschläuche schützend umgibt. Derartige Entstaubungsfilter sind auf einem Silo oder sonstigen vergleichbaren Behälter angebracht und sind für die Filtrierung der Abluft beim pneumatischen Befüllen derselben mit pulverförmigen, trockenen Schüttgütern, wie sie speziell in der Bau-, Stein- und Erden-Industrie anfallen, geeignet. Mit einem solchen Entstaubungsfilter wird verhindert, dass zusammen mit der beim Befüllen des Behälters nach außen entweichenden Luft auch gleichzeitig Schüttgüter aus dem Behälter nach oben heraus entweichen können. Derartige Schüttgüter-Partikel werden von den im Inneren des Entstaubungsfilters vorhandenen Filterschläuchen zurückgehalten. Es lässt sich nicht vermeiden, dass die sich an den Filterschläuchen ablagernden Partikel mit der Zeit die Poren der Filterschläuche verstopfen, was dann einen Austausch der Filterschläuche erforderlich werden lässt.

### STAND DER TECHNIK

Aus der EP 0 655 939 B1 ist ein derartiger Staubfilter mit mehreren Filterschläuchen bekannt. Dieser danach vorbekannte gattungsmäßige Entstaubungsfilter besitzt einen mehrere Türen aufweisenden Mantel. Der obere Rand des Mantels wird von einer Haube von außen abdeckend umgriffen. Die Haube kann aus ihrer unteren Stellung, in der sie den oberen Mantelrand des Mantels im seitlichen Abstand von oben umgreift, in eine obere Stellung versetzt werden, in der sie derart oberhalb des Mantels vorhanden ist, dass jedes als Tür ausgebildetes Mantelteil ohne Behinderung durch die Haube auf- und zugemacht werden kann. Dieses höhenmäßige Versetzen der Haube erfolgt dabei auf folgende Weise. Die Haube wird aus ihrer unteren Stellung längs ihres Umfangrandes nacheinander mit jeweils Teilbereichen in eine obere Stellung hochgehoben. Beim Hochschieben gleitet dieser Bereich des Haubenrandes längs einer Anlaufschräge etwas nach außen. In entsprechender Höhe ist ein Rastschlitz vorhanden, in den die Haube mit einer an ihrer Innenseite angebrachten Rastnase hineingreifen kann. Während beim Hochheben längs der Anlaufschräge eine elastische Verformung des entsprechenden Haubenbereichs nach außen erforderlich wird, wird diese Verformung in Höhe des Rastschlitzes, in den die Haube sich radial nach innen hineinbewegt, wieder rückgängig gemacht. Die Haube muss also elastisch ausreichend verformbar sein. Außerdem muss dieses Hochheben der Haube an umfangsmäßig versetzten, mehreren Stellen in aufeinander folgenden Schritten durchgeführt werden, was einen entsprechenden Aufwand erfordert. Beim Schließen der Haube sind diese mehreren Schritte nacheinander in umgekehrter Folge durchzuführen; so sind nacheinander einzelne Teilbereiche der Haube aus dem jeweiligen Schlitz nach außen herauszuziehen und nach unten zu verschieben. Auch dies muss an mehreren Stellen ihres Umfanges mehrmals nacheinander durchgeführt werden..

### DARSTELLUNG DER ERFINDUNG

Ausgehend von diesem Stand der Technik liegt der Erfindung die Aufgabe zugrunde, einen bedienungsfreundlichen Entstaubungsfilter der eingangs genannten Art anzugeben.

Diese Erfindung ist durch Merkmale des Anspruchs 1 gegeben. Sinnvolle Weiterbildungen der Erfindung sind Gegenstand von sich daran anschließenden weiteren Ansprüchen.

Der erfindungsgemäße Entstaubungsfilter zeichnet sich dadurch aus, dass seine Haube so auf- und zuschwenkbar vorhanden ist, dass die Haube bei ihrer Schwenkbewegung in ihre AUF-Stellung gleichzeitig insgesamt auch eine ausreichende Hubbewegung ausführt, damit sie den Mantel und die darin als Türen ausgebildeten Mantelteile nicht mehr von oben umgreifen und dadurch das Aufschwenken solcher Türen verhindern kann.

Dieses scharnierartige Gelenk ist nach einem in der Zeichnung dargestellten Ausführungsbeispiel ein Gestänge aus drei aneinander hängenden Gelenkstäben, wobei die beiden Endstäbe gelenkig an dem Gehäuse des Entstaubungsfilters schwenkbar befestigt sind, während der mittlere Gelenkstab biegesteif von innen an der Haube befestigt ist. Weitere Einzelheiten zu einem derartigen Gelenk sind weiteren Ansprüchen und einem Ausführungsbeispiel zu entnehmen. Dabei erweist es sich für das Auf- und Zuschwenken der Haube als vorteilhaft, wenn dieselbe in ihrer AUF-Stellung von zumindest einem vorzugsweise zwei Haltegliedern lastmäßig abgestützt gehalten werden kann. Eine solche Möglichkeit, die Haube in ihrer AUF-Stellung selbständig zu halten, kann durch Halteglieder wie beispielsweise Gasdruckfedern verwirklicht werden, wie ebenfalls das Ausführungsbeispiel zeigt.

Weitere Vorteile und Merkmale der Erfindung ist den in den Ansprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine perspektivische, schematische Ansicht eines erfindungsgemäßen Entstaubungsfilters, mit aufgeschwenkter Haube und mit einer aufgeschwenkten Tür,
- Fig. 2: ein schematisierter Gelenkplan des bei dem erfindungsgemäßen Entstaubungsfilter nach Fig. 1 verwendeten scharnierartigen Gelenks,
- Fig. 3 bis 6: perspektivische Ansichten des bei dem erfindungsgemäßen Ent- staubungsfilter verwendeten scharnierartigen Gelenks aus seiner ZU- Stellung (Fig. 3) über zwei Zwischenstellungen (Fig. 4, 5) in seine extreme AUF-Stellung (Fig. 6).

### WEGE ZUM AUSFÜHREN DER ERFINDUNG

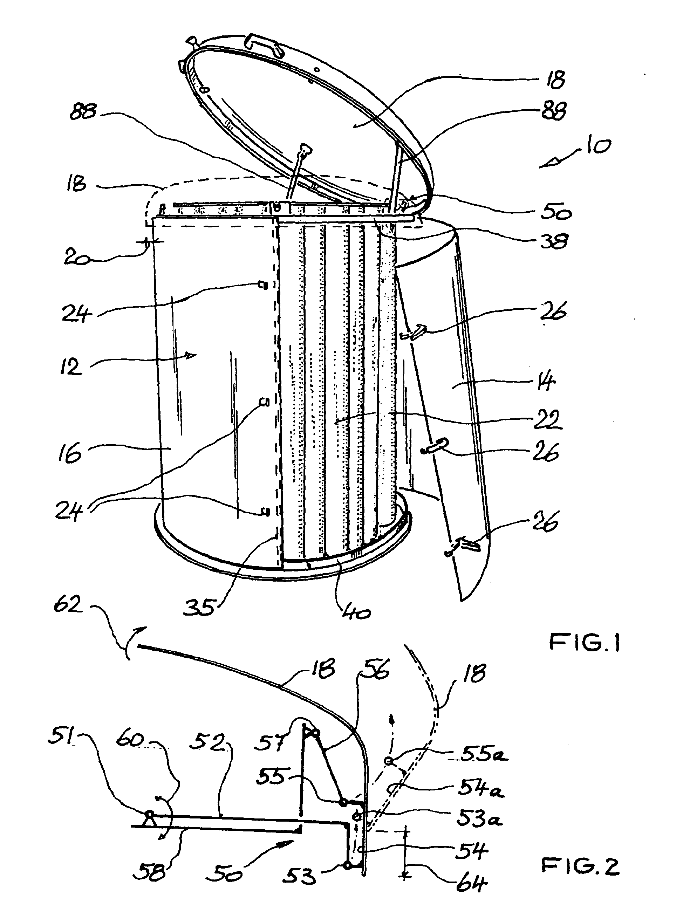

Ein Entstaubungsfilter 10 besitzt einen im Grundriss etwa kreiszylindrischen Mantel 12, der aus im vorliegenden Beispielsfall drei Mantelteilen 14,16 zusammengesetzt ist, von denen in Fig. 1 lediglich zwei Mantelteile 14, 16 dargestellt sind. Das auf der Rückseite des Entstaubungsfilters 10 vorhandene Mantelteil ist bei der Darstellung der Fig. 1 nicht zu erkennen.

Oben wird der Entstaubungsfilter 10 von einer im Grundriss ebenfalls kreisförmigen Haube 18 bedeckt. Die Haube 18 ist im Grundriss größer als es dem Kreisdurchmesser des Mantels 12 entspricht. Dadurch ist zwischen Mantel 12 und Haube 18 ein Ringspalt 20 im geschlossenen Zustand der Mantelteile, wie im dargestellten Mantelteil 16, vorhanden. Durch diesen Spalt 20 hindurch kann die im Inneren des Entstaubungsfilters 10 vorhandene Reinluft nach außen entweichen.

Innerhalb des Entstaubungsfilters 10 sind mehrere Filterschläuche 22 vorhanden, die von der zu reinigenden Luft von innen nach außen durchströmt werden.

Die drei Mantelteile 14,16 des Mantels 12 reichen von einem oberen Aussteifungsring 38 bis zu einem unteren Aussteifungsring 40. Die beiden Aussteifungsringe, die die Filterschläuche 22 von außen einrahmen, sind durch umfangsmäßig verteilte, im vorliegenden Beispielsfall der Anzahl der Mantelteile entsprechenden drei Mantelstreben 35 fest miteinander verbunden. Die beiden Aussteifungsringe 38, 40 und die Mantelstreben 35 bilden gleichsam ein gitterartiges Gehäuse des Entstaubungsfilters 10. Im vorliegenden Beispielsfall bildet jeweils eine Mantelstrebe ein Scharnier für jeweils ein Mantelteil. So bildet zum Beispiel die Mantelstrebe 35 ein Scharnier für das Mantelteil 16. Entsprechendes gilt für die anderen beiden Mantelteile. Jedes Mantelteil 14, 16 bildet damit eine Tür, durch die das Innere des Entstaubungsfilters 10 und damit die Filterschläuche 22 von außen zugänglich sind. Im Bereich der Mantelstrebe 35 sind auf der Außenseite des Mantelteils 16 drei Klammern 24 befestigt. An diesen Klammern 24 kann das umfangsmäßig sich anschließende Mantelteil 14 mit seinen dementsprechend ebenfalls drei Haken 26 so angeklammert werden, dass auch das Mantelteil 14, in gleicher Weise wie das in Fig. 1 dargestellte Mantelteil 16, sich in seiner ZU-Stellung befindet. In Fig. 1 ist ein teilweise aufgeschwenkter Zustand des Mantelteils 14 dargestellt. Zu diesem Zweck muss sich die Haube 18 in ihrer in Fig. 1 dargestellten aufgeschwenkten Stellung befinden. Im vollständig geschlossenen Zustand des Entstaubungsfilters 10, in der die Haube 18 nach unten verschwenkt ist, umgreift der untere Rand der Haube 18 die drei Mantelteile 14, 16 von außen her unter Freilassung eines Ringspaltes 20, wie bereits vorstehend ausgeführt ist.

Zum Öffnen der als Türen jeweils ausgebildeten Mantelteile 14,16 muss die Haube 18 in ihre in Fig. 1 dargestellte maximalen AUF-Stellung gebracht werden, in der sie nicht nur aufgeschwenkt, sondern auch von den Mantelteilen 14, 16 nach oben ein Stück weit angehoben ist, so dass jede beliebige der drei Mantelteile 14, 16 in Art einer Tür aufgeschwenkt werden kann.

Die Haube 18 ist über ein scharnierartiges Gelenk 50 an dem oberen Aussteifungsring 38 befestigt. Dieses Gelenk 50 besitzt drei Gelenkstäbe 52, 54, 56. Der erste dieser Gelenkstäbe 52 ist mit seinem einen Ende durch ein Gelenk 51 an einem Widerlagerteil 58 schwenkbar (Doppelpfeil 60) angelenkt. Das andere Ende dieses ersten Gelenkstabes 52 ist über ein Gelenk 53 an dem zweiten Gelenkstab 54 angeschlossen. Das andere Ende dieses zweiten Gelenkstabes 54 ist über ein Gelenk 55 an dem dritten Gelenkstab 56 angeschlossen. Das andere Ende dieses dritten Gelenkstabes 56 ist über ein Gelenk 57 ebenfalls an dem Widerlager 58 schwenkbar befestigt. Der zweite Gelenkstab 54 ist außerdem biegesteif an der Innenseite der Haube 18 befestigt. Dazu kann der Gelenkstab an der Haube 18 angeschraubt oder beispielsweise auch angeschweißt sein.

Die drei Gelenkstäbe sind nun so ausgebildet und angeordnet, dass beim Anheben der Haube 18 (Pfeil 62) sich die Haube 18 in die in Fig. 2 gestrichelte Stellung verschwenkt. Dabei wird der zweite Gelenkstab 54 in seine Stellung 54a versetzt. Dabei gelangen die Gelenke 53 und 55 in die Lage 53a beziehungsweise 55a. Die Gelenke 51 und 57, die fest an dem Widerlager 58 angeordnet sind, behalten ihre Lage bei. Wie die Fig. 2 deutlich macht, wird für das Aufschwenken der Haube 18 (Pfeil 62) die Haube 18 um das Maß 64 hochgehoben. Dieses Maß 64 bewirkt, dass die Haube nicht mehr den oberen Rand der drei Mantelteile 14, 16 von außen teilweise einrahmt, so dass die Mantelteile 14, 16 frei aufgeschwenkt werden können.

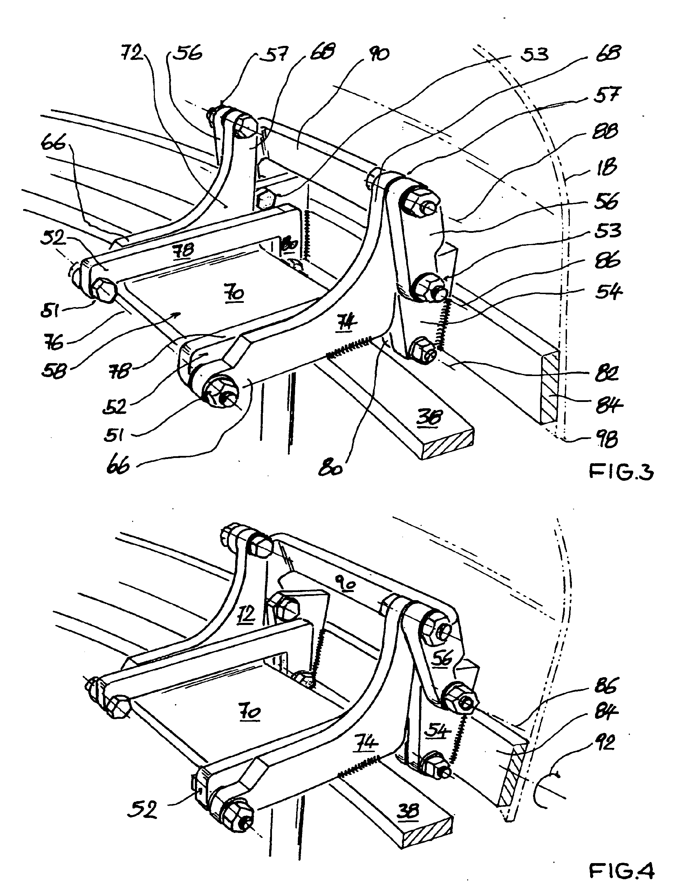

Die Fig. 3 bis 6 zeigen verschiedene Schwenk-Stellungen der Gelenkstäbe des Gelenks 50.

Das Widerlager 58, das an dem oberen Aussteifungsring 38 angeschweißt ist, liegt mit seiner Platte 70 flach auf dem Aussteifungsring 38 auf. Die Platte 70 kragt ein Stück weit in den Innenraum des Entstaubungsfilters 10. Die Platte 70 besitzt einander umfangsmäßig gegenüberliegende wandartige Aufbiegungen 72, 74. An dem inneren Ende 66 der jeweiligen Aufbiegung 72, 74 ist über jeweils eine Gelenkausbildung 51 ein in Bezug auf die Fig. 3 bis 6 hinterer und vorderer erster Gelenkstab 52 mit seinem in das Innere des Entstaubungsfilters 10 zeigenden Ende angelenkt. An den beiden Gelenken 51 sind die beiden miteinander fluchtenden Gelenkachsen 76 dargestellt.

Jeder der beiden ersten Gelenkstäbe 52 ist winkelförmig mit einem parallel zur Platte 70 ausgebildeten Horizontalschenkel 78 und einem daran rechtwinklig nach unten kragenden vergleichsweise kürzeren Schenkel 80 ausgebildet. An dem unteren Schenkel 80 eines jeden ersten Gelenkstabes 52, 53, von dem die Gelenkachse 82 dargestellt ist, ist der zweite Gelenkstab 54 gelenkig angeschlossen. An der Außenseite dieses zweiten Gelenkstabes 54 ist die Haube 18 mittels eines an ihrer Innenseite befestigten umlaufenden Ringes 84 angeschweißt befestigt. An dem zweiten Gelenkstab 54 ist über das Gelenk 53 der dritte Gelenkstab 56 gelenkig angeschlossen. Die für beide Gelenke 53 gemeinsame Gelenkachse 86 ist zeichnerisch dargestellt. Das Ende der beiden dritten Gelenkstäbe 56 ist über das jeweilige Gelenk 57, deren Gelenkachsen 88 miteinander fluchten, an dem jeweiligen äußeren Ende 68 der wandartigen Aufbiegungen 72, 74 angelenkt. Die beiden Gelenke 57 und damit die Gelenkachse 88 sind oberhalb der beiden Gelenke 51 und damit oberhalb deren gemeinsamer Gelenkachse 76 vorhanden. Die beiden zweiten Gelenkstäbe 56 sind über ein wandartiges Koppelglied 90 einteilig miteinander verbunden, wodurch eine Stabilität der beiden drei Gelenkstäbe auch in Umfangsrichtung der Haube 18 sichergestellt ist.

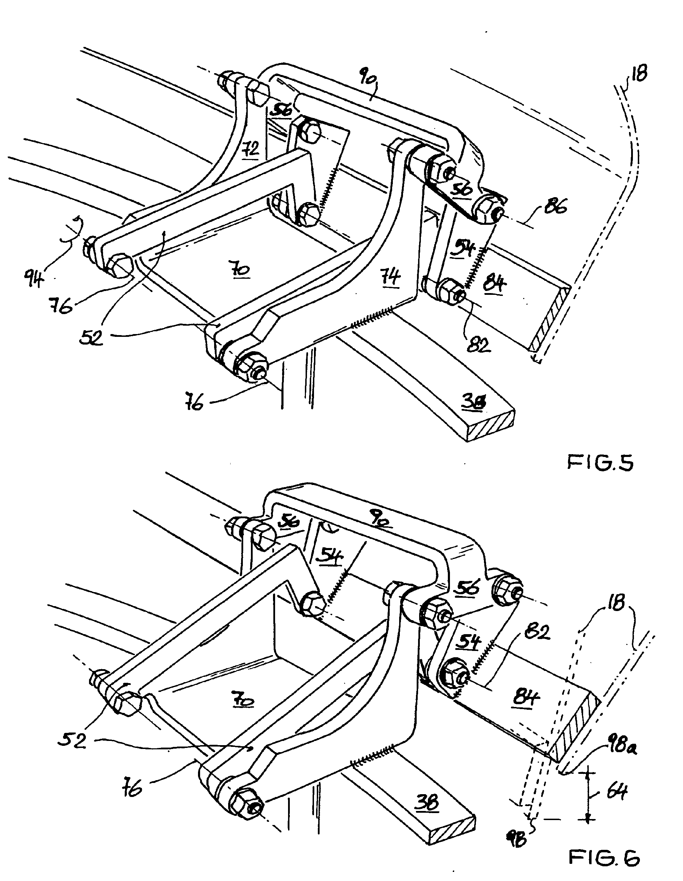

Beim Aufschwenken der Haube 18 aus ihrer ZU-Stellung (Fig. 3) wird die Gelenkachse 86 ein Stück weit nach außen verschoben in Folge der im Uhrzeigersinn (Pfeil 92) verdrehten Lage der Haube 18 und damit auch ihres Ringes 84. Die beiden ersten Gelenkstäbe 52 haben bei der anfänglichen Aufwärtsbewegung der Haube 18, was in Fig. 4 dargestellt ist, ihre anfängliche Lage noch nicht verändert. Erst im Laufe des weiteren Aufschwenkens, beginnen auch sie sich im Gegenuhrzeigersinn 94 (Fig. 5) um ihre Gelenkachse 76 zu verschwenken. Dieses Verschwenken der beiden ersten Gelenkstäbe 52 erfolgt zwangsweise dadurch, dass sich die Gelenkachse 82 bei dieser Aufschwenkbewegung der Haube 18 nach oben anhebt. Sobald die Haube ihre maximale Aufschwenkstellung erreicht hat (Fig. 6) hat sich ihre Gelenkachse 82 relativ zu ihrer in Fig. 3 gezeigten Position soweit nach oben und gleichzeitig radial nach außen verschoben, dass der untere Rand 98 der Haube 18 eine in Fig. 6 dargestellte Position 98a einnimmt. Dabei hat sich dieser Rand 98 um das Maß 64 nach oben verschoben.

Bei ihrer Aufschwenkbewegung und in ihrer maximalen AUF-Stellung wird die Haube 18 von im vorliegenden Beispielsfall zwei Gasdruckfedern 88 lastmäßig gehalten.

Vom Abwärtsbewegen der Haube 18 gelangt die Haube aus ihrer in Fig. 6 dargestellten maximalen AUF-Stellung wieder in ihre in Fig. 3 dargestellte ZU-Stellung zurück.

## Patentansprüche

1. Entstaubungsfilter (10),
- mit einem mehrere Filterschläuchen (22) aufnehmenden Gehäuse,
- mit einem zumindest eine Tür aufweisenden Mantel (12),
- mit einer den oberen Rand des Mantels (12) von außen umgreifenden und dabei die Filterschläuche (22) von oben abdeckenden Haube (18),
- **dadurch gekennzeichnet, dass**
- die Haube (18) über ein scharnierartiges Gelenk (50) schwenkbar am Gehäuse so befestigt ist, dass
- die Haube (18) bei ihrer Schwenkbewegung in ihre AUF-Stellung gleichzeitig insgesamt eine derartige Hubbewegung erfährt, dass
- die Haube (18) in ihrer maximalen AUF-Stellung oberhalb des oberen Randes des Mantels (12) vorhanden ist, so dass die Haube (18) den Mantel (12) nicht mehr von oben umgreift.

2. Entstaubungsfilter nach Anspruch 1,
- **dadurch gekennzeichnet, dass**
- das scharnierartige Gelenk (50) zumindest ein Gestänge aus drei aneinander hängenden Gelenkstäben (52,54,56) aufweist,
- der erste (52) und der dritte (56) dieser Gelenkstäbe jeweils am Gehäuse schwenkbar befestigt ist,
- an dem zweiten, mittleren (54) dieser Gelenkstäbe die Haube (18) biegesteif befestigt ist.

3. Entstaubungsfilter nach Anspruch 2,
- **dadurch gekennzeichnet, dass**
- im oberen Bereich des Gehäuses dasselbe einen umlaufenden Aussteifungsring (38) besitzt,
- das scharnierartige Gelenk (50) an diesem Ring (38) befestigt ist.

4. Entstaubungsfilter nach Anspruch 2 oder 3,
- **dadurch gekennzeichnet, dass**
- am Gehäuse beziehungsweise am Aussteifungsring (38) ein Widerlagerteil (58) fest angebracht ist,
- in einem inneren Ende (66) des Widerlagerteils (58) der erste Gelenkstab (52) angelenkt ist,
- in einem äußeren Ende (68) des Widerlagerteils (58) der dritte Gelenkstab (56) angelenkt ist.

5. Entstaubungsfilter nach Anspruch 4,
- **dadurch gekennzeichnet, dass**
- das äußere Ende (68) des Widerlagerteils oberhalb seines inneren Endes (66) vorhanden ist.

6. Entstaubungsfilter nach einem der vorstehenden Ansprüche,
- **dadurch gekennzeichnet, dass**
- zumindest ein Mantelteil (14, 16) des Mantels (12) als Tür ausgebildet ist,
- dieses Mantelteil (14,16) in seiner ZU-Stellung von der in ihrer ZU-Stellung befindlichen Haube (18) von außen mit seitlichem Abstand umfaßt und von der in ihrer AUF-Stellung befindlichen Haube (18) nicht umfaßt wird.

7. Entstaubungsfilter nach Anspruch 6,
- **dadurch gekennzeichnet, dass**
- der Mantel (12) mehrere, sich jeweils im Scharnierbereich schuppenartig überlappende Mantelteile (14, 16) besitzt, die jeweils als Tür ausgebildet sind.

8. Entstaubungsfilter nach Anspruch 6 oder 7,
- **dadurch gekennzeichnet, dass**
- ein durch die Haube (18) von oben abdeckbares Rahmengestell vorhanden ist,
- das Rahmengestell einen oberen und einen unteren Aussteifungsring (38, 40) besitzt, die durch Mantelstreben (35) fest miteinander verbunden sind,
- umfangsmäßig zwischen jeweils zwei Mantelstreben (35) ein als Tür ausgebildetes Mantelteil (14, 16) vorhanden ist, eine solche Mantelstrebe (35) ein Schamierteil für ein Mantelteil (14, 16) bildet.

9. Entstaubungsfilter nach einem der vorstehenden Ansprüche,
- **dadurch gekennzeichnet, dass**
- zumindest ein die Haube (18) in ihrer AUF-Stellung haltendes Halteglied vorhanden ist.

10. Entstaubungsfilter nach Anspruch 9,
- **dadurch gekennzeichnet, dass**
- das Halteglied eine Gasdruckfeder (88) ist.

## Claims

1. Dust removal filter (10),
- with a housing receiving a plurality of filter bags (22),
- with a casing (12) having at least one door,
- with a hood (18) engaging from outside around the upper margin of the casing (12) and at the same time covering the filter bags (22) from above,
- **characterized in that**
- the hood (18) is fastened pivotably to the housing via a hinge-like joint (50) in such a way that
- the hood (18), during its pivoting movement into its OPEN position, simultaneously experiences, overall, a lifting movement such that
- the hood (18), in its maximum OPEN position, is present above the upper margin of the casing (12), so that the hood (18) no longer engages around the casing (12) from above.

2. Dust removal filter according to Claim 1,
- **characterized in that**
- the hinge-like joint (50) has at least one rod assembly consisting of three joint rods (52, 54, 56) suspended one on the other,
- the first (52) and the third (56) of these joint rods are in each case fastened pivotably to the housing,
- the hood (18) is fastened in a flexurally resistant manner to the second, middle (54) of these joint rods.

3. Dust removal filter according to Claim 2,
- **characterized in that**
- the housing possesses in its upper region a peripheral stiffening ring (38),
- the hinge-like joint (50) is fastened to this ring (38).

4. Dust removal filter according to Claim 2 or 3,
- **characterized in that**
- an abutment part (58) is attached fixedly to the housing or to the stiffening ring (38),
- the first joint rod (52) is articulated in an inner end (66) of the abutment part (58),
- the third joint rod (56) is articulated in an outer end (68) of the abutment part (58).

5. Dust removal filter according to Claim 4,
- **characterized in that**
- the outer end (68) of the abutment part is present above its inner end (66).

6. Dust removal filter according to one of the preceding claims,
- **characterized in that**
- at least one casing part (14, 16) of the casing (12) is designed as a door,
- this casing part (14, 16), in its SHUT position, is surrounded from outside, with lateral clearance, by the hood (18) located in its SHUT position and is not surrounded by the hood (18) located in its OPEN position.

7. Dust removal filter according to Claim 6,
- **characterized in that**
- the casing (12) possesses a plurality of casing parts (14, 16) which in each case overlap one another in an imbricated manner in the hinge region and which are designed in each case as a door.

8. Dust removal filter according to Claim 6 or 7,
- **characterized in that**
- a framework which can be covered from above by the hood (18) is present,
- the framework possesses an upper and lower stiffening ring (38, 40) which are connected fixedly to one another by means of casing struts (35),
- a casing part (14, 16) designed as a door is present circumferentially in each case between two casing struts (35),
- such a casing strut (35) forms a hinge part for a casing part (14, 16).

9. Dust removal filter according to one of the preceding claims,
- **characterized in that**
- at least one holding member holding the hood (18) in its OPEN position is present.

10. Dust removal filter according to Claim 9,
- **characterized in that**
- the holding member is a gas-pressure spring (88).

## Revendications

1. Filtre de dépoussiérage (10),
- avec un boîtier recevant plusieurs manches de filtration (22),
- avec une enveloppe (12) présentant au moins une porte,
- avec un couvercle (18) s'engageant de l'extérieur autour du bord supérieur de l'enveloppe (12) en recouvrant les manches de filtration (22) par le dessus,
**caractérisé en ce que**
- le couvercle (18) est fixé à pivotement sur le boîtier au moyen d'une articulation du genre charnière (50) de telle sorte que
- le couvercle (18), lors de son mouvement de pivotement dans sa position ouverte, accomplit en même temps globalement un mouvement de translation tel que
- le couvercle (18) se trouve dans sa position ouverte maximale au-dessus du bord supérieur de l'enveloppe (12), de sorte que le couvercle (18) ne s'engage plus autour de l'enveloppe (12) par le dessus.

2. Filtre de dépoussiérage selon la revendication 1, **caractérisé en ce que**
- l'articulation du genre charnière (50) présente au moins une tringlerie constituée de trois tiges articulées (52, 54, 56) attachées entre elles,
- la première (52) et la troisième (56) de ces tiges articulées sont respectivement fixées à pivotement sur le boîtier,
- le couvercle (18) est fixé de manière rigide en flexion sur la deuxième (54) de ces tiges articulées, qui se trouve en position intermédiaire.

3. Filtre de dépoussiérage selon la revendication 2, **caractérisé en ce que**
- le boîtier possède dans sa région supérieure une bague de renforcement entourante (38),
- l'articulation du genre charnière (50) est fixée sur cette bague (38).

4. Filtre de dépoussiérage selon la revendication 2 ou 3, **caractérisé en ce que**
- un élément de contre appui (58) est fixement installé sur le boîtier ou encore sur la bague de renforcement (38),
- la première tige articulée (52) est articulée à une extrémité intérieure (66) de l'élément de contre-appui (58),
- la troisième tige articulée (56) est articulée à une extrémité extérieure (68) de l'élément de contre-appui (58).

5. Filtre de dépoussiérage selon la revendication 4, **caractérisé en ce que** l'extrémité extérieure (68) de l'élément de contre-appui se trouve au-dessus de son extrémité intérieure (66).

6. Filtre de dépoussiérage selon l'une des revendications précédentes, **caractérisé en ce que**
- au moins une partie d'enveloppe (14, 16) de l'enveloppe (12) est conçue comme porte,
- cette partie d'enveloppe (14, 16), dans sa position fermée, est entourée de l'extérieur à distance latérale par le couvercle (18) se trouvant dans sa position fermée, et n'est pas entourée par le couvercle (18) se trouvant dans sa position ouverte.

7. Filtre de dépoussiérage selon la revendication 6, **caractérisé en ce que** l'enveloppe (12) possède plusieurs parties d'enveloppe (14, 16) qui se chevauchent respectivement dans la zone de charnière en formation imbriquée et qui sont respectivement conçues comme portes.

8. Filtre de dépoussiérage selon la revendication 6 ou 7, **caractérisé en ce que**
- il est prévu une structure de cadre pouvant être recouverte par le dessus par le couvercle (18),
- la structure de cadre possède une bague de renforcement supérieure (38) et une bague de renforcement inférieure (40), qui sont fixement reliées entre elles par des entretoises d'enveloppe (35),
- une partie d'enveloppe (14, 16) conçue comme porte est chaque fois présente entre deux entretoises d'enveloppe (35) sur le pourtour,
- une telle entretoise d'enveloppe (35) constitue un élément de charnière pour une partie d'enveloppe (14, 16).

9. Filtre de dépoussiérage selon l'une des revendications précédentes, **caractérisé en ce qu'**il est prévu au moins un organe de maintien maintenant le couvercle (18) dans sa position ouverte.

10. Filtre de dépoussiérage selon la revendication 9, **caractérisé en ce que** l'organe de maintien est un ressort à gaz (88).
